# EUROPÄISCHE PATENTSCHRIFT

(11) **EP 2 236 061 B1**
(45) Veröffentlichungstag und Bekanntmachung des Hinweises auf die Patenterteilung: **07.12.2011**
(21) Anmeldenummer: 10153969.0
(22) Anmeldetag: 18.02.2010
(51) Int. Cl.: A47J 31/44

(54) **Getränkeautomat**
Automatic beverage dispenser
Automate à boissons

(30) Priorität: 23.03.2009 DE 102009001752
(43) Veröffentlichungstag der Anmeldung: 06.10.2010
(73) Patentinhaber: BSH Bosch und Siemens Hausgeräte GmbH, 81739 München (DE)
(72) Erfinder: Haslacher, Christian, 5303, Thalgau (AT); Huber, Michael, 6341, Ebbs (AT); Magg, Johann, 83368, St. Georgen (DE)

(56) Entgegenhaltungen:
- DE-C1- 3 902 281
- DE-U1-202006 014 354

## Beschreibung

Die vorliegende Erfindung betrifft einen Getränkeautomaten, insbesondere einen Kaffeevollautomaten, mit einem ein Gehäuse mit einer Unterdruckkammer aufweisenden Milchaufschäumer. Die Erfindung betrifft außerdem ein Drehelement für einen derartigen Getränkeautomaten.

Mit modernen Getränkeautomaten, wie beispielsweise Kaffeevollautomaten, können nicht nur unterschiedlichste Kaffeemischgetränke, wie beispielsweise Cappuccino, hergestellt werden, sondern es kann beispielsweise auch Milch ohne Schaumbildung erwärmt werden, beispielsweise für ein Kakaogetränk. Das Ausgeben von warmer Milch wird dabei üblicherweise über eine gesonderte Taste aktiviert, woraufhin der Getränkeautomat aus einem Milchreservoir Milch ansaugt und über seinen Cappuccinoauslauf in ein Getränkegefäß einfüllt. Eine derartige Taste kann beispielsweise auch als Drehschalter ausgebildet sein.

Die Druckschrift DE-C-3902281 offenbart einen Getränkeantomaten gemäss Oberbegriff des Anspruchs 1.

Die vorliegende Erfindung beschäftigt sich mit dem Problem, für einen Getränkeautomaten eine verbesserte Ausführungsform anzugeben, die sich insbesondere durch einen konstruktiv äußerst einfach aufgebauten Milchaufschäumer auszeichnet, mit welchem sowohl Milchschaum als auch warme Milch ausgegeben werden kann.

Dieses Problem wird erfindungsgemäß durch die Gegenstände der unabhängigen Ansprüche gelöst. Vorteilhafte Ausführungsformen sind Gegenstand der abhängigen Ansprüche.

Die vorliegende Erfindung beruht auf dem allgemeinen Gedanken, einen an sich bekannten Milchaufschäumer mit einem erfindungsgemäßen Drehelement auszustatten, welches eine innenliegende Kanalstruktur aufweist und welches durch ein einfaches Verdrehen die Erzeugung von Milchschaum bzw. die Ausgabe von erwärmter Milch ermöglicht. Der erfindungsgemäße Milchaufschäumer weist hierzu ein Gehäuse auf, in welchem eine Unterdruckkammer angeordnet ist. Ebenfalls angeordnet im Gehäuse sind ein Dampfzuführkanal und ein Luftzuführkanal, wobei der Dampfzuführkanal direkt in die Unterdruckkammer mündet. Das erfindungsgemäße Drehelement ist verdrehbar in das Gehäuse einsteckbar und weist einen mit einem Milchreservoir verbindbaren Einlasskanal, zwei unterschiedlich große Auslasskanäle sowie zumindest einen Verbindungskanal auf. Die beiden Auslasskanäle unterscheiden sich dabei vorzugsweise in deren freiem Strömungsquerschnitt. Durch ein Verdrehen des Drehelementes im Gehäuse werden wahlweise der Einlasskanal über den größeren Auslasskanal mit der Unterdruckkammer oder der Einlasskanal über den kleineren Auslasskanal und gleichzeitig der Luftzuführkanal über den Verbindungskanal mit der Unterdruckkammer verbunden. In der ersten Drehstellung ist somit der größere Auslasskanal und der Dampfzuführungskanal mit der Unterdruckkammer im Gehäuse des Milchaufschäumers verbunden, während der Luftzuführkanal abgesperrt ist. In dieser Stellung kann somit Heißmilch erzeugt werden. Wird hingegen das Drehelement so verdreht, dass der Einlasskanal des Drehelementes über den kleineren Auslasskanal und gleichzeitig der Luftzuführkanal über den Verbindungskanal mit der Unterdruckkammer verbunden ist, so kann eine Ausgabe von Milchschaum erfolgen. Mit dem erfindungsgemäßen Drehelement kann eine konstruktiv besonders einfache Ventileinrichtung geschaffen werden, die lediglich durch ein einfaches Verdrehen eine alternative Auswahl von Milchschaum bzw. erwärmter Milch ermöglicht. Am Einlasskanal des Drehelementes ist darüber hinaus ein Stutzen angeordnet, auf welchen ein Schlauch, insbesondere ein Milchschlauch, gesteckt und so das Drehelement bzw. der Einlasskanal mit einem Milchreservoir verbunden werden kann. Von besonderem Vorteil ist auch, dass die Kraftrichtung beim Verdrehen des Drehelementes in Richtung des Dampfzuführkanals erfolgt und dadurch Schwenkbewegungen, wie sie beispielsweise bei einer Frontbedienung erzeugt werden, vermieden werden können. Zugleich das erfindungsgemäße Drehelement, insbesondere sofern dieses aus Kunststoff ausgebildet ist, kostengünstig und in nahezu beliebiger Ausführungsform herstellbar, wodurch eine besonders hohe Flexibilität erreicht werden kann.

Bei einer vorteilhaften Weiterbildung der erfindungsgemäßen Lösung, ist das Drehelement ergonomisch ausgeformt. Das Drehelement kann beispielsweise rotationssymmetrisch ausgebildet sein oder aber insbesondere für eine einhändige Bedienung, beispielsweise eine Bedienung mit der rechten Hand, vorbereitet sein. Die rotationssymmetrische Ausbildung des Drehelementes stellt dabei die einfachste Ausführungsform dar, wobei bei dieser, beispielsweise mittels einer Farbmarkierung, die relative Drehwinkellage des Drehelementes visualisiert wird. Eine ähnliche Visualisierung kann beispielsweise über optische Elemente, wie beispielsweise Striche, hervorgerufen werden. Mit einem ergonomisch geformten Drehelement kann insbesondere der Drehwiderstand desselben durch eine verbesserte Handhabbarkeit und eine verbesserte Angriffsmöglichkeit reduziert werden, was zusätzlich dadurch gesteigert werden kann, dass das Drehelement beispielsweise eine aufgeraute, insbesondere eine griffige, Oberfläche besitzt.

Bei einer vorteilhaften Weiterbildung der erfindungsgemäßen Lösung, ist das Drehelement leicht entnehmbar am Gehäuse des Milchaufschäumers festgelegt und zudem spülmaschinenfest ausgebildet. Insbesondere die Reinigung moderner Milchaufschäumer bereitet oftmals Schwierigkeiten, da diese konstruktiv komplex aufgebaut sind und sich dadurch nur vergleichsweise schwer montieren bzw. demontieren lassen. Gänzlich anders ist hierbei das erfindungsgemäße Drehelement ausgebildet, welches zur Montage am Gehäuse des Milchaufschäumers lediglich in eine komplementär zu einem am Drehelement ausgebildeten Fortsatz ausgebildete Ausnehmung am Gehäuse eingesteckt werden muss. Zur Demontage des erfindungsgemäßen Drehelementes muss dieses lediglich aus der Ausnehmung herausgezogen werden und kann anschließend ohne weitere Demontagearbeiten gereinigt, insbesondere in eine Spülmaschine gelegt werden. Mit dem erfindungsgemäßen Drehelement lassen sich somit auch eine deutlich vereinfachte Reinigung und damit ein erhöhter Hygienestandard erreichen.

Weitere wichtige Merkmale und Vorteile der Erfindung ergeben sich aus den Unteransprüchen, aus der Zeichnung und aus der zugehörigen Figurenbeschreibung anhand der Zeichnung.

Ein bevorzugtes Ausführungsbeispiel der Erfindung ist in der Zeichnung dargestellt und wird in der nachfolgenden Beschreibung näher erläutert.

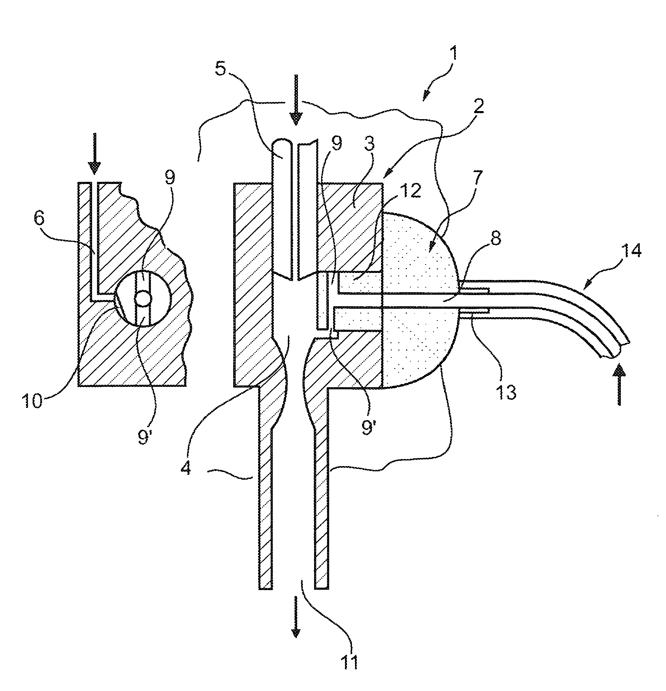

Die einzige Fig. 1 zeigt eine Schnittdarstellung durch einen erfindungsgemäßen Milchaufschäumer.

Entsprechend der Fig. 1, weist ein erfindungsgemäßer Getränkeautomat 1, insbesondere in der Art eines Kaffeevollautomatens, einen Milchaufschäumer 2 auf, welcher in einem Gehäuse 3 eine Unterdruckkammer 4 besitzt. Im Gehäuse 3 sind darüber hinaus ein Dampfzuführkanal 5 sowie ein Luftzuführkanal 6 angeordnet (vgl. linke Schnittdarstellung der Fig. 1), wobei der Dampfzuführkanal 5 direkt in die Unterdruckkammer 4 mündet. Darüber hinaus ist ein in das Gehäuse 3 verdrehbar einsteckbares Drehelement 7 vorgesehen, das einen mit einem Milchreservoir verbindbaren Einlasskanal 8, zwei unterschiedlich große Auslasskanäle 9 und 9' (vgl. wiederum die linke Schnittdarstellung der Fig. 1) sowie zumindest einen Verbindungskanal 10 aufweist. Gemäß der Darstellung in Fig. 1 weist dabei der Auslasskanal 9 einen größeren Strömungsquerschnitt auf als der Auslasskanal 9'.

Erfindungsgemäß ist nun das Drehelement 7 derart ausgebildet, dass es durch ein Verdrehen wahlweise den Einlasskanal 8 über den größeren Auslasskanal 9 mit der Unterdruckkammer 4 verbindet (nicht dargestellt) oder den Einlasskanal 8 über den kleineren Auslasskanal 9' und gleichzeitig den Luftzuführkanal 6 über den Verbindungskanal 10 mit der Unterdruckkammer 4. Durch ein bloßes Verdrehen des Drehelementes 7 ist somit eine Ausgabe von erwärmter Milch oder eine Ausgabe von Milchschaum möglich.

Bei der gemäß der Fig. 1 dargestellten Drehstellung des Drehelementes 7 ist der Einlasskanal 8 über den kleineren Auslasskanal 9' mit der Unterdruckkammer 4 verbunden, wobei in diesem Zustand Milchschaum aus einem Auslauf 11 austritt. Aufgrund des geringeren Strömungsquerschnitts des kleineren Auslasskanals 9' verbleibt die aus dem Milchreservoir angesaugte Milch länger im Milchaufschäumer 2 und wird dadurch länger mit heißem Dampf aus dem Dampfzuführkanal 5 beaufschlagt, wobei die gleichzeitig über den Luftzuführkanal 6 und den Verbindungskanal 10 zugeführte Luft eine Schaumbildung bewirkt. Wird demgegenüber das Drehelement 7 um 180° verdreht, so ist der Luftzuführkanal 6 durch einen in das Gehäuse 3 hineinragenden Fortsatz 12 des Drehelementes 7 verschlossen, so dass ein Ansaugen der Milch über den Einlasskanal 8 und eine Ausgabe derselben über den Auslasskanal 9 in die Unterdruckkammer 4 erfolgt. In dieser Drehstellung erfolgt das Erzeugen von Heißmilch.

Auf seiner dem Gehäuse 3 abgewandten Seite weist das Drehelement 7 einen Stutzen 13 zur Aufnahme eines Schlauchs 14, insbesondere zur Aufnahme eines Milchansaugschlauches, auf. Wie der Fig. 1 weiter zu entnehmen ist, ist das Drehelement 7 über seinen Fortsatz 12 in das Gehäuse 3 einsteckbar und zwar vorzugsweise dicht einsteckbar, wobei zur Abdichtung ein zusätzliches Dichtelement vorgesehen werden kann. Zum Reinigen des Drehelementes 7 ist dieses einfach mit seinem Fortsatz 12 aus dem Gehäuse 3 abziehbar und kann anschließend, beispielsweise in einer Spülmaschine, gereinigt werden. Da das Drehelement 7 darüber hinaus aus Kunststoff, insbesondere als Kunststoffspritzgussteil, ausgebildet ist, kann dieses in nahezu beliebiger Ausführungsform und zudem kostengünstig hergestellt werden. Betrachtet man die Fig. 1 weiter, so kann man erkennen, dass die beiden Auslasskanäle 9 und 9' orthogonal zum Einlasskanal 8 im Drehelement 7 verlaufen, wobei dies jedoch nicht zwingend erforderlich ist.

Um ein Verdrehen des Drehelementes 7 zu vereinfachen und damit die Handhabbarkeit zu erleichtern, kann das Drehelement 7 darüber hinaus ergonomisch geformt sein oder zumindest eine haptisch wahrnehmbare, insbesondere eine aufgeraute, Oberfläche aufweisen. Gemäß der Fig. 1 ist das Drehelement 7 als rotationssymmetrisches Element ausgebildet, wobei es selbstverständlich auch weitere, insbesondere an eine menschliche Hand angepasste, Formen denkbar sind.

Mit dem erfindungsgemäßen Drehelement 7 kann eine einfache Verstellmöglichkeit zwischen Milchschäumen und Milcherwärmen mit vergleichsweise wenigen Teilen erreicht werden, wobei das Drehelement 7 zugleich als Anschlussstück für den Schlauch 14 dient. Die Kraftrichtung beim Verdrehen des Drehelementes 7 erfolgt dabei in Richtung des Dampfrohres, wodurch Schwenkbewegungen, wie sie bei einer Frontbedienung entstehen würden, vermieden werden können. Darüber hinaus kann der Milchaufschäumer 2 äußerst kompakt aufgebaut und durch seine geringe Teilevielfalt kostengünstig hergestellt werden. Die geringe Teilezahl erleichtert auch ein Reinigen bzw. ein Zerlegen des erfindungsgemäßen Milchaufschäumers 2.

### Bezugszeichenliste

- 1: Getränkeautomat
- 2: Milchaufschäumer
- 3: Gehäuse
- 4: Unterdruckkammer
- 5: Dampfzuführkanal
- 6: Luftzuführkanal
- 7: Drehelement
- 8: Einlasskanal
- 9: Auslasskanal
- 10: Verbindungskanal
- 11: Auslauf
- 12: Fortsatz
- 13: Stutzen
- 14: Schlauch

## Patentansprüche

1. Getränkeautomat (1), insbesondere ein Kaffeevollautomat, mit einem ein Gehäuse (3) mit einer Unterdruckkammer (4) aufweisenden Milchaufschäumer (2), wobei
- im Gehäuse (3) ein Dampfzuführkanal (5) und ein Luftzuführkanal (6) angeordnet sind,
- ein in das Gehäuse (3) verdrehbar eingestecktes Drehelement (7) vorgesehen ist, das einen mit einem Milchreservoir verbindbaren Einlasskanal (8) aufweist, **dadurch gekennzeichnet, dass** das Drehelement (7) zwei unterschiedlich große Auslasskanäle (9,9') sowie zumindest einen Verbindungskanal (10) aufweist, wobei
- das Drehelement (7) derart ausgebildet ist, dass es durch ein Verdrehen wahlweise den Einlasskanal (8) über den größeren Auslasskanal (9) mit der Unterdruckkammer (4) oder den Einlasskanal (8) über den kleineren Auslasskanal (9') und gleichzeitig den Luftzuführkanal (6) über den Verbindungskanal (10) mit der Unterdruckkammer (4) verbindet und so eine Ausgabe von erwärmter Milch oder Milchschaum ermöglicht.

2. Getränkeautomat nach Anspruch 1, **dadurch gekennzeichnet, dass** an dem Drehelement (7) auf seiner dem Gehäuse (3) abgewandten Seite ein Stutzen (13) zur Aufnahme eines Schlauchs (14) angeordnet ist.

3. Getränkeautomat nach Anspruch 1 oder 2, **dadurch gekennzeichnet, dass** das Drehelement (7) ergonomisch geformt ist.

4. Getränkeautomat nach einem der Ansprüche 1 bis 3, **dadurch gekennzeichnet, dass** das Drehelement (7) über einen Fortsatz (12) dicht in das Gehäuse (3) einsteckbar ist.

5. Getränkeautomat nach einem der Ansprüche 1 bis 4, **dadurch gekennzeichnet, dass** das Drehelement (7) leicht entnehmbar am Gehäuse (3) des Milchaufschäumers (2) festgelegt und zudem spülmaschinenfest ausgebildet ist.

6. Getränkeautomat nach einem der Ansprüche 1 bis 5, **dadurch gekennzeichnet, dass** der Verbindungskanal (10) als Freischliff ausgebildet ist.

7. Getränkeautomat nach einem der Ansprüche 1 bis 6, **dadurch gekennzeichnet, dass** das Drehelement (7) aus Kunststoff ausgebildet ist.

8. Getränkeautomat nach einem der Ansprüche 1 bis 7, **dadurch gekennzeichnet, dass** die beiden Auslasskanäle (9,9') orthogonal zum Einlasskanal (8) verlaufen.

9. Drehelement (7) für einen Getränkeautomat (1) nach einem der Ansprüche 1 bis 8, mit einem Einlasskanal (8) und zwei unterschiedlich großen Auslasskanälen (9,9'), sowie zumindest einem Verbindungskanal (10).

## Claims

1. Beverage machine (1), particularly a coffee machine, with a milk foaming device (2) comprising a housing (3) having a subatmospheric-pressure chamber (4), wherein
- a steam feed channel (5) and an air feed channel (6) are arranged in the housing (3),
- a rotary element (7) plugged into the housing (3) to be rotatable is provided, which element comprises an inlet channel (8) connectible with a milk reservoir, **characterised in that** the rotary element (7) has two outlet channels (9, 9') of different size as well as at least one connecting channel (10), wherein
- the rotary element (7) is so constructed that through rotation it selectably connects the inlet channel (8) by way of the larger outlet channel (9) with the subatmospheric-pressure chamber (4) or the inlet channel (8) by way of the smaller outlet channel (9') and at the same time the air feed channel (6) by way of the connecting channel (10) with the subatmospheric-pressure chamber (4) and thus enables issue of heated milk or milk foam.

2. Beverage machine according to claim 1, **characterised in that** a stub pipe (13) for receiving a hose (14) is arranged at the rotary element (7) on its side remote from the housing (3).

3. Beverage machine according to claim 1 or 2, **characterised in that** the rotary element (7) is ergonomically shaped.

4. Beverage machine according to any one of claims 1 to 3, **characterised in that** the rotary element (7) is tightly insertable into the housing (3) by way of a projection (12).

5. Beverage machine according to any one of claims 1 to 4, **characterised in that** the rotary element (7) is fixed to the housing (3) of the milk foaming device (2) to be easily removable and is in addition constructed to be dishwasher-proof.

6. Beverage machine according to any one of claims 1 to 5, **characterised in that** the connecting channel (10) is formed as a ground-away portion.

7. Beverage machine according to any one of claims 1 to 6, **characterised in that** the rotary element (7) is made of plastics material.

8. Beverage machine according to any one of claims 1 to 7, **characterised in that** the two outlet channels (9, 9') extend orthogonally to the inlet channel (8).

9. Rotary element (7) for a beverage machine (1) according to any one of claims 1 to 8, with an inlet channel (8) and two outlet channels (9, 9') of different size as well as at least one connecting channel (10).

## Revendications

1. Distributeur de boissons (1), notamment distributeur de café entièrement automatique, comprenant un boîtier (3) muni d'un dispositif de moussage de lait (2) présentant une chambre à dépression (4),
- un canal d'amenée de vapeur (5) et un canal d'amenée d'air (6) étant disposés dans le boîtier (3),
- un élément tournant (7) emboîté de manière tournante dans le boîtier (3) étant prévu, lequel élément tournant présente un canal d'admission (8) raccordable à un réservoir de lait, **caractérisé en ce que** l'élément tournant (7) présente deux canaux de sortie (9, 9') de différentes grosseurs ainsi qu'au moins un canal de liaison (10),
- l'élément tournant (7) étant réalisé de manière à ce qu'en raison d'une rotation, il raccorde de manière sélective le canal d'admission (8) via le canal de sortie plus gros (9) à la chambre à dépression (4) ou le canal d'admission (8) via le canal de sortie plus petit (9') et qu'il raccorde simultanément le canal d'amenée d'air (6) via le canal de liaison (10) à la chambre à dépression (4) et permet ainsi une décharge de lait échauffé ou de mousse de lait.

2. Distributeur de boissons selon la revendication 1, **caractérisé en ce qu'**un embout (13) destiné au logement d'un tuyau (14) est disposé sur l'élément tournant (7) sur son côté détourné du boîtier (3).

3. Distributeur de boissons selon la revendication 1 ou 2, **caractérisé en ce que** l'élément tournant (7) est formé de manière ergonomique.

4. Distributeur de boissons selon l'une quelconque des revendications 1 à 3, **caractérisé en ce que** l'élément tournant (7) est emboîtable dans le boîtier (3) de manière étanche par l'intermédiaire d'un prolongement (12).

5. Distributeur de boissons selon l'une quelconque des revendications 1 à 4, **caractérisé en ce que** l'élément tournant (7) est fixé sur le boîtier (3) du dispositif de moussage de lait (2) de manière légèrement amovible et est en outre réalisé de manière convenant au lave-vaisselle.

6. Distributeur de boissons selon l'une quelconque des revendications 1 à 5, **caractérisé en ce que** le canal de liaison (10) est réalisé en tant que surface polie libre.

7. Distributeur de boissons selon l'une quelconque des revendications 1 à 6, **caractérisé en ce que** l'élément tournant (7) est réalisé en matière plastique.

8. Distributeur de boissons selon l'une quelconque des revendications 1 à 7, **caractérisé en ce que** les deux canaux de sortie (9, 9') s'étendent orthogonalement au canal d'admission (8).

9. Elément tournant (7) pour un distributeur de boissons (1) selon l'une quelconque des revendications 1 à 8, comprenant un canal d'admission (8) et deux canaux de sortie (9, 9') de différentes grosseurs ainsi qu'au moins un canal de liaison (10).
